# EUROPÄISCHE PATENTSCHRIFT

(11) **EP 4 562 331 B1**
(45) Veröffentlichungstag und Bekanntmachung des Hinweises auf die Patenterteilung: **29.04.2026**
(21) Anmeldenummer: 23748516.4
(22) Anmeldetag: 27.07.2023
(51) Int. Cl.: F16K 37/00, G01L 3/14

(54) **MESSEINRICHTUNG**
MEASURING DEVICE
DISPOSITIF DE MESURE

(30) Priorität: 27.07.2022 DE 202022104260 U
(43) Veröffentlichungstag der Anmeldung: 04.06.2025
(73) Patentinhaber: Samson Aktiengesellschaft, 60314 Frankfurt (DE)
(72) Erfinder: KOLBENSCHLAG, Stefan, 64291 Darmstadt (DE)
(74) Vertreter: patcare Patentanwälte Partnerschaft mbB
(86) Internationale Anmeldenummer: PCT/EP2023/070858
(87) Internationale Veröffentlichungsnummer: WO 2024/023226

(56) Entgegenhaltungen:
- WO-A1-2021/123445
- DE-B3- 102014 019 547
- US-A1- 2022 099 217

## Beschreibung

Die Erfindung betrifft eine Messeinrichtung nach dem Oberbegriff des Anspruchs 1 sowie eine Ventilbaugruppe nach Anspruch 13.

Stellventile werden zur Regelung von Stoffströmen in Anlagen der chemischen Industrie, Erdölchemie, Kraftwerken und anderen Bereichen eingesetzt. Sie haben in der Regel ein Gehäuse, in dem sich ein Ventilsitz und ein beweglich gelagertes Ventilglied befinden. Das Ventilglied wird durch eine Ventilstange geführt, wobei die Ventilstange von einem Drehantrieb angetrieben wird. Dabei ist der Drehantrieb mit der Ventilstange über ein Kupplungselement verbunden.

Vor allem bei Sicherheitsstellventilen aber auch bei allen anderen Ventiltypen ist es vorteilhaft, Messdaten während der Bewegung des Ventilgliedes mittels Messeinrichtungen aufzunehmen und zu speichern. Als Messeinrichtungen sind Positionssensoren und/oder Drehmomentsensoren geeignet. Auf diese Weise kann eine Veränderung des benötigten Drehmomentes und/oder ein Drehmomentverlauf über die Zeit während des Betriebes aufgezeichnet und Veränderungen erkannt werden.

DE 10 2014 019 547 B3 offenbart einen Drehmoment- und Winkelsensor zum Ermitteln eines von einem Antriebsteil auf ein Abtriebsteil übertragenes Drehmoment.

In der WO 2018/024496 A1 ist ein Flanschträger als Drehmomentmesssystem zum beidseitigen Tragen eines Stellventils und eines Stellantriebs beschrieben. Der Flanschträger ist zwischen dem Stellventil und dem Stellantrieb angebunden und misst die Abstützkräfte des Flanschträgers. Der Flanschträger besitzt Federstege, welche in Richtung des durch den Stellantrieb einleitbaren Drehmoments deformationsweich sind und in andere Bewegungsrichtungen deformationshart, sodass primär Drehmomente, welche der Antrieb an den Schaft des Ventilgliedes weitergibt, gemessen werden. Andere Kräfte, wie Vibrationen und Gewichtskräfte, fließen nur unwesentlich in die Messung mit ein.

Eine weitere Messeinrichtung für eine Stellventilbaugruppe ist beispielsweise in der WO 2021/123445 A1 realisiert.

In der DE 11 2017 003 008 T5 ist eine Drehmomenterfassungsvorrichtung offenbart, die das Drehmoment, das an ein Gelenkbauteil eines Industrieroboters angelegt wird, erfasst.

Die DE 10 2014 019547 B3 beschreibt eine alternative Einrichtung zur Erfassung von Drehmoment und Drehwinkel, die zwischen einem Stellantrieb und einem Ventil eingesetzt werden kann. Hier wird eine elastische Verformung durch Torsion der Welle genutzt.

Die US 2022/099217 A1 offenbart eine Drehmomenterfassungseinrichtung mit einem Sensor, wobei der Sensor zum Ablesen von Winkeln verwendet werden kann.

Es ist Aufgabe der Erfindung, eine Messeinrichtung zur Drehmoment- und Drehwinkelmessung an einem zwischen Stellventil und Stellantrieb anordbaren Gehäuse derart weiterzubilden, dass eine kompakte und variabel einsetzbare Bauweise realisiert wird und der Verkabelungsaufwand für die Sensorik reduziert wird.

Diese Aufgabe wird durch die kennzeichnenden Merkmale des Anspruchs 1 in Verbindung mit seinen Oberbegriffsmerkmalen gelöst.

Die Unteransprüche bilden vorteilhafte Weiterbildungen der Erfindung.

In bekannter Art und Weise umfasst eine Messeinrichtung mit einem zwischen einem Stellventil und einem Stellantrieb anordbaren Gehäuse zum Aufnehmen mindestens eines beim Betätigen des Stellventils durch den Stellantrieb sich ergebenden Kraft- und/oder Drehmomentverlaufs. Das Gehäuse weist dabei eine erste und eine zweite Anschlusswand und zumindest ein die erste und zweite Anschlusswand verbindendes Verbindungselement auf. Die erste Anschlusswand ist dabei mit dem Stellantrieb und die zweite Anschlusswand mit dem Stellventil verbunden. In einer mittigen Durchgangsöffnung der beiden Anschlusswände ist eine Verbindungswelle zum Verbinden einer Antriebswelle des Stellantriebs mit einer Betätigungswelle des Stellventils um eine Drehachse drehbar gelagert verbunden. Die Verbindungswelle durchdringt die Messeinrichtung. Die Verbindungswelle ist gegenüber den Anschlusswänden in einem Abstand frei drehbar angeordnet. Zwischen erster Hierdurch wird eine kompakte und platzsparende Überwachung des Betriebs des Stellventils realisiert. Die Messeinrichtung, die zwischen dem Stellantrieb und dem Stellventil fixiert ist, ist dazu ausgebildet, Reaktionskräfte, die beim Verfahren der Stellarmatur durch den Stellantrieb entstehen, zwischen dem Gehäuse des Stellantriebs und des Stellventils zu übertragen.

Erfindungsgemäß ist der erste Signalgeber an der ersten Anschlusswand und der zweite Signalgeber an der Verbindungswelle angeordnet. Hiermit werden die Überwachung der Kräfte, die auf die Verbindungswelle und die erste Anschlusswand wirken, und der Drehwinkel der Verbindungswelle zu einer Anschlusswand gemessen.

Vorzugsweise ist der Signalgeber in Form eines vom Signalaufnehmer abzutastenden Musters ausgebildet. Durch die Wahl eines abzutastenden Musters ist die Auflösung der Messeinheit je nach Anwendung einfach einstellbar ausgebildet.

Bevorzugt ist das Messmodul an dem Verbindungelement angeordnet. Hierdurch ist eine zentrale Positionierung des Messmoduls gegenüber der Verbindungswelle und der ersten Anschlusswand gewährleistet, welche eine einfache Montage und eine flexible Positionierung ermöglichen.

Vorzugsweise ist das Messmodul zwischen der ersten und zweiten Anschlusswand radial beabstandet zur Verbindungswelle angeordnet. Das Messmodul mit den jeweiligen Signalaufnehmern ist in einem definierten Abstand zu den abtastbaren Mustern positioniert. Als Signalaufnehmer kommen unter anderem Drehmoment- und Drehwinkelsensoren in Frage. Diese Sensoren sind in der Weise im Messmodul positioniert, dass die jeweiligen abtastbaren Muster in einem definierten Abstand zueinanderstehen.

Um eine hohe Auflösung bei zugleich kleiner Bauform zu realisieren, ist zumindest eine Teilmesseinheit als Magnetsensor ausgebildet, insbesondere sind beide Teilmesseinheiten als Magnetsensoren ausgebildet.

Gemäß einer weiteren vorteilhaften Ausführungsform der Erfindung ist der Signalgeber der Drehwinkelsensoreinheit als abzutastendes Muster mit zumindest einem Magnetelement, wie einem Polring, und der Signalaufnehmer durch einen das Magnetelement erfassenden Drehwinkelsensor ausgebildet. Durch die Überwachung des Drehwinkels der Verbindungswelle und des Drehmoments, Anschlusswand und Verbindungselement ist zumindest ein elastisches Element vorgesehen. Des Weiteren ist eine Messeinheit vorgesehen. Die Messeinheit weist mindestens zwei Teilmesseinheiten auf. Die erste Teilmesseinheit ist als eine Drehmomentsensoreinheit und die zweite Teilmesseinheit ist als eine Drehwinkelsensoreinheit ausgebildet. Die Teilmesseinheiten weisen jeweils einen Signalgeber in der Form eines abzutastenden Musters und ein Signalaufnahmeelement auf. Die Signalaufnahmeelemente sind in einem gemeinsamen Messmodul angeordnet. den der Stellantrieb auf das Gehäuse ausübt, lassen sich mögliche Störeinflüsse des Stellantriebs und des Stellventils detektieren.

Bevorzugt ist der Signalgeber der Drehmomentsensoreinheit als abzutastendes Muster mit zumindest einem Magnetelement ausgebildet und der Signalaufnehmer durch einen das Magnetelement erfassenden Drehmomentsensor ausgebildet. Hierdurch wird eine berührungslose und verschleißfreie Positionserfassung der ersten Anschlusswand gewährleistet.

Vorzugsweise ist das elastische Element in Drehrichtung der Drehachse elastischer als in Richtung der Drehachse ausgeführt. Durch die elastische Ausbildung des elastischen Elements in Drehrichtung der Drehachse ist weitestgehend gewährleistet, dass die vom Stellantrieb eingeleiteten Drehmomente gemessen werden und andere Störeinflüsse die Messgenauigkeit des Drehmomentsensors nicht beeinflussen.

Nach einer weiteren vorteilhaften Ausführungsform der Erfindung ist das elastische Element durch die erste Anschlusswand und das Verbindungselement verbindende Stege gebildet. Durch die Ausbildung des elastischen Elements als Stege kann einfach die benötigte Elastizität des Gehäuses eingestellt werden.

Bevorzugt verlaufen die Stege radial von der ersten Anschlusswand zum Verbindungsmittel in Bezug auf die Drehachse. Durch eine radiale Ausbildung der Stege ist die Erstreckung des Gehäuses in Richtung des Drehantriebs geringgehalten.

Gemäß einer weiteren vorteilhaften Ausführungsform der Erfindung verlaufen die Stege axial von der ersten Anschlusswand zum Verbindungsmittel in Bezug auf die Drehachse parallel. Durch die axiale Ausbildung der Stege kann die Grundfläche des Gehäuses einfach reduziert werden.

Bevorzugt weisen die erste Anschlusswand und die zweite Anschlusswand, insbesondere auch das Verbindungselement, eine einander entsprechende Steifigkeit auf. Hierdurch wird gewährleistet, dass eine beidseitige Kraftübertragung des Gehäuses ermöglicht ist, wobei Störgrößen durch die elastischen Stege minimiert werden.

Gemäß einer weiteren vorteilhaften Ausführungsform der Erfindung sind Anschlussöffnungen in der ersten Anschlusswand für die Verbindung des Stellantriebs mit der ersten Anschlusswand und in der zweiten Anschlusswand für die Verbindung des Stellventils mit der zweiten Anschlusswand vorgesehen. Durch die Anschlussöffnungen lässt sich der Stellantrieb an der ersten Anschlusswand und das Stellventil an der zweiten Anschlusswand fest verbinden, um eine gute Kraftübertragung zwischen Stellantrieb und Stellventil zu gewährleisten.

Vorzugsweise bilden das Verbindungselement und die zweite Anschlusswand einen Grundkörper, der eine Form aufweist, welche eine im Wesentlichen rechteckige Umhüllende ergibt. Dies sorgt für eine gute Stabilität des Grundkörpers.

Bevorzugt weist der Grundkörper eine im Wesentlichen U-förmige Grundform auf. Hierdurch kann in der Produktion des Gehäuses Material eingespart werden und trotzdem die Stabilität erhalten werden.

Gemäß einer weiteren vorteilhaften Ausführungsform der Erfindung umfasst das Messmodul eine Platine, die die Teile der Sensoreinheiten, die Messwandler, einen Mikrocontroller, ein Speicherelement, ein Anschlussmittel, ein Übertragungsmittel und ein Kommunikationsmittel, insbesondere auch eine Schnittstelle, aufweist. Eine Signalverarbeitung und -weiterleitung wird einfach und kompakt realisiert.

Um eine ausreichend schnelle Regelung zu verwirklichen, ist im Messmodul ein Stellungsregler, insbesondere ein I/P-Wandler und/oder eine Motorsteuerung, vorgesehen.

Zur breiten Überwachung möglicher Störfälle kann die Messeinrichtung eine Temperatursensoreinheit zur Erfassung der Temperatur aufweisen, wobei die Temperatursensoreinheit am Messmodul angeordnet ist.

Ein weiterer Aspekt der Erfindung betrifft eine Ventilbaugruppe, die einen Antrieb mit einer Antriebsstange, ein Stellventil, das über eine Ventilstange betätigbar ist, sowie eine Messeinrichtung umfasst. Erfindungsgemäß ist die Messeinrichtung lösbar mit dem Gehäuse des Stellantriebs und lösbar mit dem Gehäuse des Stellventils verbunden, wobei die Messeinrichtung über die Verbindungswelle die Antriebswelle des Stellantriebs und die Antriebswelle des Stellventils verbindet.

Vorzugsweise ist in erfindungsgemäßen Ventilbaugruppen mit Messeinrichtungen, welche unterschiedlich dimensionierte Stellantriebe, Stellventile und Gehäuse der Messeinrichtung aufweisen, die Dimension und Ausbildung des Messmoduls der Ventilbaugruppen jeweils gleich ausgeführt. Hierdurch wird der Produktionsaufwand bei unterschiedlichen Messeinrichtungen und immer gleich dimensionierten Messmodulen erheblich verringert. Das Messmodul ist für unterschiedliche Drehmomentbereiche der verschiedenen Stellantriebe und Stellantriebe ausgelegt. Weiter ist die Einbindung des Messmoduls in unterschiedlich dimensionierte Messeinrichtungen in einfacher Weise möglich, da die abzutastenden Muster zur Drehwinkel- sowie Drehmomentaufnahme und die Signalaufnehmer festgelegte Positionen besitzen und die Messmodule zu den Messeinrichtungen Zentrierungen zur exakten Fixierung in der Messeinrichtung besitzen.

Bevorzugt liegt die Grundfläche A des Messmoduls in dem Bereich von 30 mm² <= A <= 50 mm². Hierdurch wird eine Anwendung für übliche Ventilgrößen und Platinen ermöglicht, ohne den Bauraum unnötigerweise zu vergrößern.

Gemäß einer weiteren vorteilhaften Ausführungsform der Erfindung ist die Positionierung des Signalgebers zum Signalaufnehmer jeder Ventilbaugruppe jeweils gleich ausgebildet. Dadurch ist die Messeinheit für unterschiedliche Ventilbaugruppen jeweils gleich kalibrier- und anwendbar.

Vorzugsweise ist der Signalaufnehmer als Polring ausgebildet, wobei die Anzahl der Pole gleichbleibend ist, unabhängig von der Dimensionierung des Gehäuses und der Verbindungswelle der Messeinrichtung. Die Auflösung des Winkelbereichs ist somit immer gleich. Der Polring ist hierbei unterschiedlich dimensioniert, sodass die Positionierung gegenüber dem Drehwinkelsensor gleichbleibt. Der Außendurchmesser des Polrings ist hierbei an die Größe des Gehäuses der Messeinrichtung und an den Abstand zum Drehwinkelsensor angepasst. Der Innendurchmesser des Polrings ist an den Durchmesser der Verbindungswelle angepasst, der für unterschiedliche Drehmomentmessbereiche variiert.

Um die Drehmomente unterschiedlich dimensionierter Stellantriebe, Stellventile und Gehäuse der Messeinrichtung aufnehmen zu können, sind die Stege in einer Weise ausgelegt, dass die messbare Auslenkung der Stege nahezu gleich ist. Die Sensorwegkennlinie und somit die Auslenkung der Stege bleiben unverändert. Die Stege sind unterschiedlich dimensioniert und an die Drehmomentbereiche der verschiedenen Messeinrichtungen angepasst. Im Messwandler der Messeinrichtung wird ein auf die Dimensionierung der jeweiligen Messeinrichtung angepasster Messbereich hinterlegt, um den passenden Drehmomentbereich ausgeben zu können.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine perspektivische Ansicht einer ersten Ausführungsform einer Messeinrichtung mit Messmodul nach der Erfindung;
- Fig. 2: eine perspektivische Ansicht einer zweiten Ausführungsform eines Teils einer Messeinrichtung nach der Erfindung;
- Fig. 3a: eine Draufsicht der Messeinrichtung nach Fig. 1;
- Fig. 3b: eine Seitenansicht der Messeinrichtung nach Fig. 3a;
- Fig. 4a: eine Draufsicht der Messeinrichtung nach Fig. 1 mit kleinen Ausmaßen;
- Fig. 4b: eine Seitenansicht der Messeinrichtung nach Fig. 4a; und
- Fig. 5: eine Seitenansicht eines Stellventils mit eingebrachter Messeinrichtung gemäß der Ausführungsform von Fig. 1 mit Messgehäuse und einem Stellantrieb.

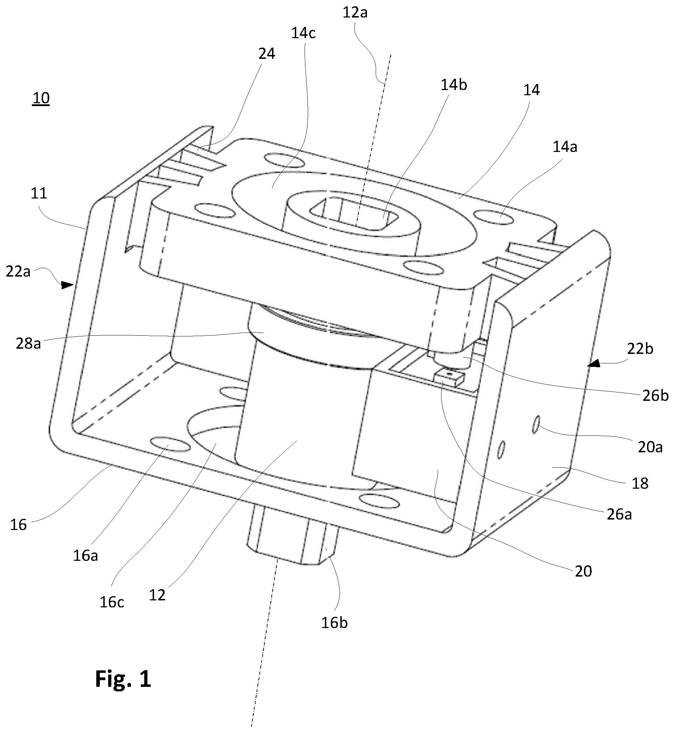

In den Fig. 1 bis 5 ist eine Messeinrichtung 10 nach der Erfindung mit jeweils einem Gehäuse 11, einer Verbindungswelle 12, einer ersten Anschlusswand 14, einer zweiten Anschlusswand 16 und einem die Anschlusswände verbindenden Verbindungselement 18 dargestellt.

Das Gehäuse 11 weist dabei eine im Wesentlichen quaderförmige Form auf. Die Verbindungswelle 12 ist zylindrisch ausgebildet und durchgreift das Gehäuse 11 im unteren Bereich in der zweiten Anschlusswand 16.

Die Fig. 1 zeigt eine perspektivische Ansicht einer ersten erfindungsgemäßen Ausführungsform der Messeinrichtung 10 mit einem Gehäuse 11 und einem Messmodul 20. Das Gehäuse 11 umfasst eine oben angeordnete erste Anschlusswand 14 und eine unten angeordnete zweite Anschlusswand 16. In die erste Anschlusswand 14 sind vier Verbindungsaufnahmen 14a eingebracht sowie zentral eine Wellenaufnahme 14b. Die zweite Anschlusswand 16 weist mehrere Verbindungsaufnahmen 16a und einen Schaft 16b auf. Die Anschlusswand 16 ist mit zwei gegenüberliegenden, seitlich fest angeordneten Verbindungswänden 22a, 22b versehen. Die Verbindungswände 22a, 22b und die Anschlusswand 16 sind materialeinheitlich und einstückig ausgebildet. Über Stege 24 ist die Anschlusswand 14 im oberen Bereich mit den Verbindungswänden 22a, 22b und somit mit der Anschlusswand 16 verbunden.

Das Verbindungselement 18 besteht aus den Stegen 24 und den Verbindungswänden 22a, 22b.

Die Verbindungsaufnahmen 14a, 16a sind zur Aufnahme eines Stellantriebs 34 oder eines Stellventils 32 ausgebildet. Des Weiteren weisen die erste Anschlusswand 14 und die zweite Anschlusswand 16 jeweils eine Öffnung 14c, 16c für die Verbindungswelle 12 einerseits zum Verbinden der Antriebswelle des Stellantriebs 34 und andererseits zum Verbinden mit der Betätigungswelle des Stellventils 32 auf.

Die Messeinrichtung 10 weist sechs Stege 24 auf, wobei die erste Anschlusswand 14 über jeweils drei Stege 24 mit der ersten Verbindungswand 22a und über jeweils drei Stege 24 mit der zweiten Verbindungswand 22b verbunden ist.

Die zweite Anschlusswand 16 und die Verbindungswände 22a, 22b bilden eine U-Form.

Die Verbindungswände 22a, 22b verlaufen parallel in Richtung der Rotationsachse 12a. Die Stege 24 verlaufen radial in Bezug auf die Rotationsachse 12a. Die Stege 24 sind in Drehrichtung der Rotationsachse 12a elastischer als in Richtung entlang der Rotationsachse 12a.

Zum formschlüssigen Koppeln der Antriebswelle und der Betätigungswelle an die Verbindungswelle 12 sind Vierkantverbindungen als Aufnahme 14b oder als Schaft 16b vorgesehen, in welchen die formkomplementären Enden der Antriebswelle und der Betätigungswelle eingreifen, und es entsteht eine drehfeste Verbindung.

Das Messmodul 20 ist an der zweiten Verbindungswand 22b angeordnet und über zwei Verbindungsaufnahmen 20a mit der zweiten Verbindungswand 22b fest verbunden. Das Messmodul 20 ist quaderförmig ausgebildet. Es weist auf der der ersten Anschlusswand 14 zugewandten Seite einen Drehmomentsensor 26a auf. Gegenüberliegend in einem Abstand ist ein Zeiger 26b mit einem Permanentmagneten 26c an der ersten Anschlusswand 14 angeordnet. Zwischen der ersten Anschlusswand 14 und der Verbindungswand 22b befinden sich die elastischen Stege 24, welche sich beim Einleiten eines Antriebsdrehmomentes auf die Betätigungswelle verformen und diese Verformung anhand einer Wegänderung mittels des Permanentmagneten 26c an dem Zeiger 26b gegenüber dem Drehmomentsensor 26a des Messmoduls 20 an der Verbindungswand 22b und einer dadurch hervorgerufenen Änderung der Magnetfeldlinienorientierung bzw. einer Magnetkraft sensieren lässt.

Das Messmodul 20 ist mittig zwischen der ersten Anschlusswand 14 und der zweiten Anschlusswand 16 angeordnet.

Der Polring 28a umgreift bereichsweise die Verbindungswelle 14 im Bereich des Messmoduls 20.

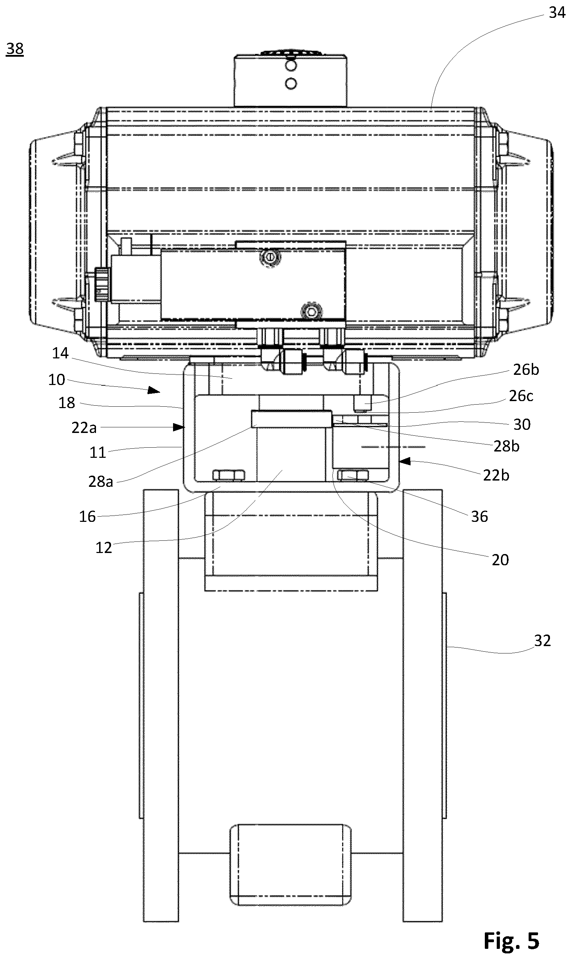

Die Verbindungsaufnahmen 14a der ersten Anschlusswand 14 dienen der Verbindung durch Verbindungselemente der Messeinrichtung 10 mit dem Stellantrieb 34, siehe Fig. 5. Die Verbindungsaufnahmen 16a der zweiten Anschlusswand 16 sind für die Verbindung durch Verbindungselemente der Messeinrichtung 10 mit dem Stellventil 32 vorgesehen.

Die Messeinrichtung 10 weist eine Temperatursensoreinheit zur Erfassung der Temperatur auf, hier im Einzelnen nicht dargestellt. Die Temperatursensoreinheit ist am Messmodul 20 angeordnet.

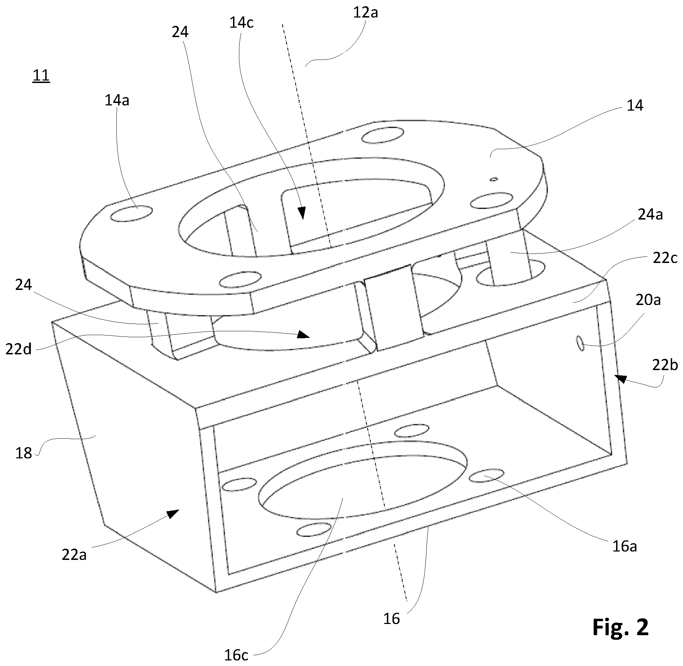

In Fig. 2 ist eine perspektivische Ansicht einer zweiten erfindungsgemäßen Ausführungsform des Gehäuses 11 dargestellt.

Das Gehäuse 11 zeigt dabei zur besseren Darstellung kein Messmodul 20 und keine Verbindungswelle 12.

Das Gehäuse 11 weist im Wesentlichen eine quaderförmige Grundform auf. Die zweite Anschlusswand 16 ist länger ausgebildet. Die zweite Anschlusswand 16 ist seitlich mit den Verbindungswänden 22a, 22b versehen. Eine Verbindungszwischenwand 22c verbindet auf der der zweiten Anschlusswand 16 entfernt gelegenen Seite die Verbindungswände 22a, 22b. Über parallel zur Rotationsachse 12a sich von der Verbindungszwischenwand 22c und der zweiten Anschlusswand 16 weg erstreckende Stege 24 ist die erste Anschlusswand 14 mit der Verbindungszwischenwand 22c über die Verbindungswände 22a, 22b mit der zweiten Anschlusswand 16 verbunden.

Die Verbindungszwischenwand 22c ist fest mit den Verbindungswänden 22a, 22b verbunden und weist eine zentrische Durchgangsöffnung 22d auf. Die Durchgangsöffnung 22d ist fluchtend zur Verbindungswellenaufnahme 14b ausgebildet. Die Stege 24 sind jeweils auf der Verbindungszwischenwand 22c angeordnet und schließen jeweils auf einer Seite mit der Durchgangsöffnung 22d ab.

Die Stege 24 verlaufen in dieser Ausführungsform axial in Richtung der Rotationsachse 12a.

Der Steg 24a ist gleichzeitig als Zeiger 26b eines Drehmomentsensors ausgebildet.

Das Verbindungselement 18 besteht in dieser Ausführungsform aus den Stegen 24, den Verbindungswänden 22a, 22b und der Verbindungszwischenwand 22c.

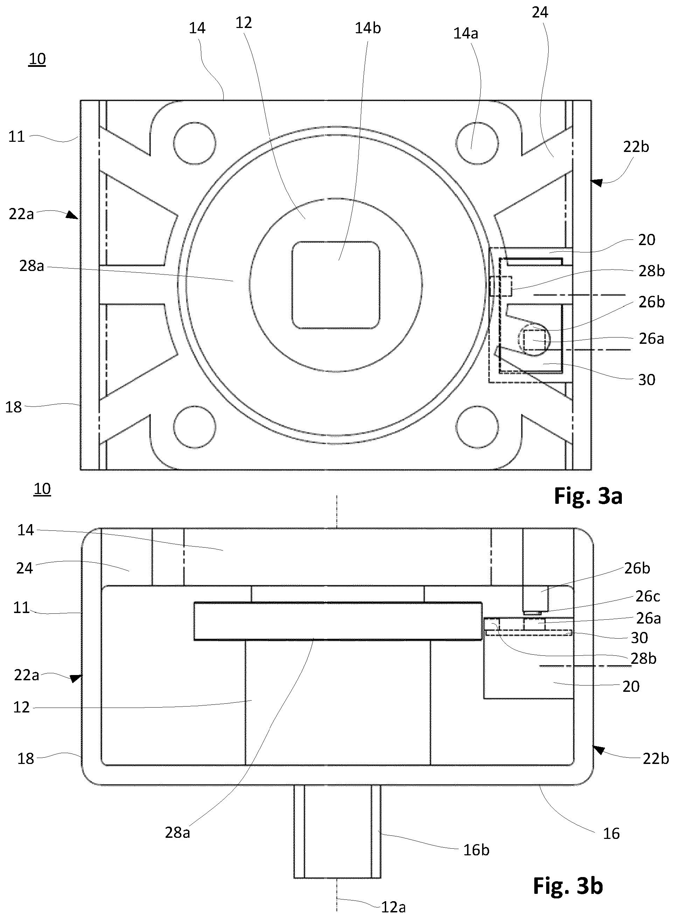

Die Fig. 3a zeigt eine Draufsicht der Messeinrichtung 10 nach Fig. 1.

Die Verbindungswellenöffnungen 14c sind mittig ausgebildet und zentrisch zur Verbindungswelle 12. Der Polring 28a umgreift die Verbindungswelle 12. Um den Polring 28a herum ist die erste Anschlusswand 14 angeordnet. Diese ist über die Stege 24 mit den Verbindungswänden 22a, 22b verbunden.

Auf der rechten Seite an der zweiten Verbindungswand 22b ist das Messmodul 20 anbracht. Das Messmodul 20 weist einen Drehmomentsensor 26a und einen Drehwinkelsensor 28b auf. Der Drehwinkelsensor 28b ist als Magnetsensor ausgebildet. Beide Sensoren 26a, 28b liegen im Bereich der zur ersten Anschlusswand 14 gerichteten Oberseite des Messmoduls 20 auf einer Platine 30 auf. Angedeutet ist zu erkennen, dass zentrisch oberhalb des Drehmomentsensors 26a ein Permanentmagnet 26c an dem Zeiger 26b angebracht ist. Der Drehwinkelsensor 28b schließt mit der dem Polring 28a zugewandten Seite des Messmoduls 20 ab. Zwischen Polring 28a und Drehwinkelsensor 28b ist ein minimaler Abstand ausgebildet, um eine Rotationsbewegung der Verbindungswelle 12 nicht zu beeinträchtigen.

Die Platine 30 umfasst des Weiteren einen Messwandler, einen Mikrocontroller, ein Speicherelement, ein Anschlussmittel, ein Übertragungsmittel und ein Kommunikationsmittel, insbesondere auch eine Schnittstelle.

Im Messmodul 20 ist ein Stellungsregler, insbesondere ein I/P-Wandler und/oder eine Motorsteuerung, vorgesehen.

Die Positionierung der Signalgeber, also des Zeigers 26b und des Polrings 28a, zu den Signalaufnehmern, also dem Drehwinkelsensor 28b und dem Drehmomentsensor 26a, jeder Messeinrichtung 10 unterschiedlicher Dimension ist jeweils gleich ausgebildet.

Die Anzahl der Pole des Polrings 28a ist gleichbleibend, unabhängig von der Dimensionierung des Stellantriebs 34, Stellventils 32 und Gehäuses 11 der Messeinrichtung 10.

In Fig. 3b ist eine Seitenansicht der Messeinrichtung 10 aus Fig. 3a dargestellt.

Der Drehmomentsensor 26a ist unterhalb des Permanentmagneten 26c an dem Zeiger 26b angebracht. Zwischen dem Drehmomentsensor 26a und dem Permanentmagneten 26c ist ein Spalt zu erkennen, sodass eine berührungslose Messung der Verformung der Stege 24 bei Einleitung eines Drehmomentes erfolgen kann.

Der Polring 28a umgreift die Verbindungswelle 12 zentrisch und ist mit dieser fest verbunden.

Unterhalb der zweiten Anschlusswand 16 steht der Schaft 16b aus der Verbindungswellenöffnung 16c der zweiten Anschlusswand 16 über.

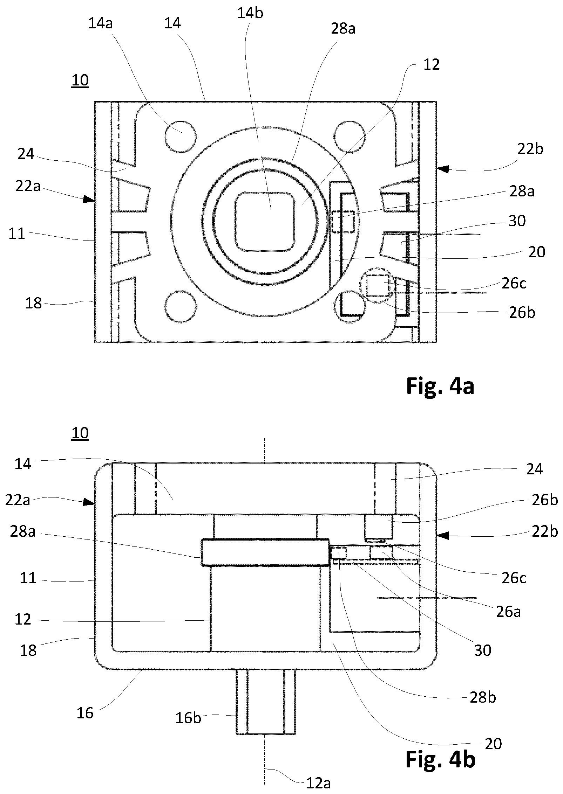

Die Fig. 4a zeigt eine Draufsicht der Messeinrichtung 10 nach Fig. 1. Das Gehäuse 11 und die Verbindungswelle 12 sowie der Polring 28a weisen dabei andere Dimensionen auf als in Fig. 3a. Die Dimensionen des Messmoduls 20 sind dabei die Gleichen wie in Fig. 3a.

Die Grundfläche A des Messmoduls 20 liegt in dem Bereich von größer gleich 30 mm² und kleiner gleich 50 mm². Die Positionierung des Polrings 28a zu dem Drehwinkelsensor 28b bleibt bei allen Größen von Messeinrichtungen 10 gleich. Die Zentrierung an der Verbindungswand 22b ist immer in der Weise angeordnet, dass das Messmodul 20 ohne zusätzliche manuelle Justage diese Position einhält. Der Polring 28a hat immer die gleiche Polzahl, auch bei unterschiedlichen Außendurchmessern der Verbindungswelle 12. Auf diese Weise ist die Auflösung pro Winkelgrad bei allen Dimensionierungen der Gehäuse 11 und Verbindungswellen 12 der Messeinrichtung 10 gleich und die Elektronik benötigt keine Anpassung der Auflösung und der Kennlinie.

In Fig. 4b ist eine Seitenansicht der Messeinrichtung 10 aus Fig. 4a dargestellt.

Die Positionierung des Drehmomentsensors 26a zu dem Zeiger 26b bleibt bei allen Größen von Messeinrichtungen 10 gleich. Die Zentrierung an der Verbindungswand 22b ist immer in der Weise angeordnet, dass das Messmodul 20 ohne zusätzliche manuelle Justage diese Position einhält. Die Stege 24 sind in der Weise ausgelegt, dass die Auslenkung der Stege 24 für die vorgesehene Nennlast, Maximallast der jeweiligen Messeinrichtung, immer gleich ist. Die Stege 24 sind also für größere Nennlasten auch entsprechend größer ausgelegt. Auf diese Weise ist die Kennlinie für die Auslenkung bei allen Dimensionierungen der Stellantriebe 34, Stellventile 32 und Gehäuse 11 der Messeinrichtung 10 gleich. In der Elektronik des Messmoduls 20 muss lediglich ein Faktor für die vorgesehene Nennlast hinterlegt werden. Die über das Magnetsystem gemessene Auslenkung wird mit einem Faktor multipliziert, um den passenden Kraftverlauf ausgeben zu können.

Die Fig. 5 zeigt eine Seitenansicht einer Stellventilbaugruppe 38 aus einem Stellventil 32 der eingebrachten Messeinrichtung 10 mit Messgehäuse 20 und einem Stellantrieb 34.

Die Messeinrichtung 10 ist dabei über Schraubverbindungen 36 mit dem Stellventil 32 an der zweiten Anschlusswand 16 lösbar verbunden. Die Messeinrichtung 10 ist an der ersten Anschlusswand 14 mit dem Stellantrieb 34 lösbar verbunden. Der Stellantrieb 34 greift in die Wellenaufnahme 14b der ersten Anschlusswand 14 ein und überträgt ein Drehmoment auf die Verbindungswelle 12. Der Schaft 16b der zweiten Anschlusswand 16 ist mit dem Stellventil 32 triebschlüssig verbunden, sodass das Drehmoment vom Stellantrieb 34 über die Verbindungswelle 12 auf das Stellventil 32 übertragen wird.

Über die Messeinrichtung 10 wird mit wenig Verkabelungs- und Produktionsaufwand für unterschiedlich dimensionierte Stellventile 32 und Stellantriebe 34 eine Überwachung des Zustands dieser Komponenten 32, 34 einer Stellventilbaugruppe 38 ermöglicht. Durch den Drehmomentsensor 26a wird ein Drehmomentverlauf aufgezeichnet, der mit einer Referenzkurve verglichen wird. Durch den Drehwinkelsensor 28b wird der Drehwinkel eines Ventilglieds im Stellventil 32 überwacht. Hierdurch kann bei kritischem Zustand des Stellantriebs 34 oder des Stellventils 32 eine Fehlermeldung abgegeben werden, um einem kompletten Ausfall der Komponenten 32, 34 vorzubeugen.

### Bezugszeichenliste

- 10: Messeinrichtung
- 11: Gehäuse
- 12: Verbindungswelle
- 12a: Rotationsachse der Verbindungswelle 12
- 14: erste Anschlusswand
- 14a: Verbindungsaufnahme der ersten Anschlusswand 14
- 14b: Wellenaufnahme der ersten Anschlusswand 14
- 14c: Verbindungswellenöffnung der ersten Anschlusswand 14
- 16: zweite Anschlusswand
- 16a: Verbindungsaufnahme der zweiten Anschlusswand 16
- 16b: Schaft der zweiten Anschlusswand 16
- 16c: Verbindungswellenöffnung der ersten Anschlusswand 16
- 18: Verbindungselement
- 20: Messmodul
- 22a: erste Verbindungswand
- 22b: zweite Verbindungswand
- 22c: Verbindungszwischenwand
- 24: Steg
- 24a: Steg mit Zeiger 26b
- 26a: Drehmomentsensor
- 26b: Zeiger
- 26c: Permanentmagnet
- 28a: Polring
- 28b: Drehwinkelsensor
- 30: Platine
- 32: Stellventil
- 34: Stellantrieb
- 36: Schraubverbindung
- 38: Stellventilbaugruppe

## Patentansprüche

1. Messeinrichtung (10) zum Aufnehmen mindestens eines beim Betätigen eines Stellventils (32) durch einen Stellantrieb (34) sich ergebenden Kraft- und/oder Drehmomentverlaufs, mit einem zwischen dem Stellventil (32) und dem Stellantrieb (34) anordbaren Gehäuse (11), das mit einer ersten und einer zweiten Anschlusswand (14, 16) und zumindest einem die erste und zweite Anschlusswand (14, 16) verbindenden Verbindungselement (18) versehen ist, wobei die erste Anschlusswand (14) mit dem Stellantrieb (34) und die zweite Anschlusswand (16) mit dem Stellventil (32) verbindbar sind, wobei in einer mittigen Durchgangsöffnung (14c, 16c) der beiden Anschlusswände (14, 16) eine Verbindungswelle (12) zum Verbinden einer Antriebswelle des Stellantriebs (34) mit einer Betätigungswelle eines Stellventils (32) angeordnet ist, wobei die Verbindungswelle (12) die Messeinrichtung (10) durchdringt, wobei die Verbindungswelle (12) gegenüber den Anschlusswänden (14, 16) in einem Abstand frei drehbar angeordnet und zwischen erster Anschlusswand (14) und dem Verbindungselement (18) zumindest ein elastisches Element vorgesehen ist, wobei eine Messeinheit im Gehäuse (11) vorgesehen ist, wobei die Messeinheit mindestens zwei Teilmesseinheiten aufweist, wobei die erste Teilmesseinheit als eine Drehmomentsensoreinheit und die zweite Teilmesseinheit als eine Drehwinkelsensoreinheit ausgebildet sind, wobei die Teilmesseinheiten jeweils einen Signalgeber und einen Signalaufnehmer aufweisen, und wobei die Signalaufnehmer in einem gemeinsamen Messmodul (20) angeordnet sind, **dadurch gekennzeichnet, dass** der erste Signalgeber an der ersten Anschlusswand (14) und der zweite Signalgeber an der Verbindungswelle (12) angeordnet ist.

2. Messeinrichtung nach Anspruch 1, **dadurch gekennzeichnet, dass** der Signalgeber in Form eines vom Signalaufnehmer abzutastenden Musters ausgebildet ist.

3. Messeinrichtung nach einem der vorangehenden Ansprüche, **dadurch gekennzeichnet, dass** das Messmodul (20) an dem Verbindungelement (18) angeordnet ist.

4. Messeinrichtung nach einem der vorangehenden Ansprüche, **dadurch gekennzeichnet, dass** das Messmodul (20) zwischen der ersten und zweiten Anschlusswand (14, 16) mittig und radial beabstandet zur Verbindungswelle (12) angeordnet ist.

5. Messeinrichtung nach einem der vorangehenden Ansprüche, **dadurch gekennzeichnet, dass** zumindest eine Teilmesseinheit, insbesondere beide Teilmesseinheiten, als Magnetsensoren ausgebildet ist.

6. Messeinrichtung nach einem der Ansprüche 2 bis 5, **dadurch gekennzeichnet, dass** der Signalgeber der Drehwinkelsensoreinheit als abzutastendes Muster mit zumindest einem Magnetelement, wie einem Polring (28a), ausgebildet und der Signalaufnehmer durch einen das Magnetelement erfassenden Drehwinkelsensor (28b) gebildet ist.

7. Messeinrichtung nach Anspruch 2 bis 6, **dadurch gekennzeichnet, dass** der Signalgeber der Drehmomentsensoreinheit als abzutastendes Muster mit zumindest einem Magnetelement (26c) ausgebildet und der Signalaufnehmer durch einen das Magnetelement (26c) erfassenden Drehmomentsensor (26a) gebildet ist.

8. Messeinrichtung nach einem der vorangehenden Ansprüche, **dadurch gekennzeichnet, dass** das elastische Element in Drehrichtung der Drehachse (12a) elastischer ist als in Richtung der Drehachse (12a) und, optional zusätzlich, dass das elastische Element durch die erste Anschlusswand und das Verbindungselement verbindende Stege (24) gebildet ist und, sofern die vorherigen Merkmale des Anspruchs vorhanden, optional zusätzlich, dass die Stege (24) radial von der ersten Anschlusswand (14) zum Verbindungselement (18) in Bezug auf die Drehachse (12a) verlaufen.

9. Messeinrichtung nach Anspruch 8, **dadurch gekennzeichnet, dass** die Stege (24) axial von der ersten Anschlusswand (14) zum Verbindungselement (18) in Bezug auf die Drehachse (12a) parallel verlaufen.

10. Messeinrichtung nach einem der vorangehenden Ansprüche, **dadurch gekennzeichnet, dass** Anschlussöffnungen (14a, 16a) in der ersten Anschlusswand (14) für die Verbindung des Stellantriebs (34) mit der ersten Anschlusswand (14) und in der zweiten Anschlusswand (16) für die Verbindung des Stellventils (32) mit der zweiten Anschlusswand (16) vorgesehen sind.

11. Messeinrichtung nach einem der vorangehenden Ansprüche, **dadurch gekennzeichnet, dass** das Messmodul (20) eine Platine (30) umfasst, die die Teile der Sensoreinheiten, die Messwandler, einen Mikrocontroller, ein Speicherelement, ein Anschlussmittel, ein Übertragungsmittel und ein Kommunikationsmittel, insbesondere auch eine Schnittstelle, aufweist.

12. Messeinrichtung nach einem der vorangehenden Ansprüche, **dadurch gekennzeichnet, dass** im Messmodul (20) ein Stellungsregler, insbesondere ein I/P-Wandler und/oder eine Motorsteuerung, vorgesehen ist.

13. Ventilbaugruppe (38) umfassend einen Stellantrieb (34) mit einer Antriebsstange, ein Stellventil (32), das über eine Ventilstange betätigbar ist, sowie eine Messeinrichtung (10) nach einem der vorangehenden Ansprüche, **dadurch gekennzeichnet, dass** die Messeinrichtung (10) lösbar mit dem Gehäuse des Stellantriebs (34) und lösbar mit dem Gehäuse des Stellventils (32) verbunden ist, wobei die Messeinrichtung (10) über die Verbindungswelle (12) die Antriebswelle des Stellantriebs (34) und die Antriebswelle des Stellventils (32) verbindet.

14. Mehrere Ventilbaugruppen nach Anspruch 13, welche unterschiedlich dimensionierte Stellantriebe, Stellventile und Gehäuse der Messeinrichtung aufweisen, **dadurch gekennzeichnet, dass** die Dimension und die Ausbildung des Messmoduls (20) der Ventilbaugruppen (38) jeweils gleich ausgeführt sind und, optional zusätzlich, dass die Grundfläche A des Messmoduls (20) in dem Bereich von 30 mm²<= A <= 50 mm² liegt und/oder, optional zusätzlich, dass die Positionierung des Signalgebers zum Signalaufnehmer jeder Ventilbaugruppe (38) jeweils gleich ausgebildet ist und, optional zusätzlich, dass der Signalaufnehmer als Polring (28a) ausgebildet ist, wobei die Anzahl der Pole gleichbleibend ist, unabhängig von der Dimensionierung des Stellantriebs (34), Stellventils (32) und Gehäuses (11) der Messeinrichtung (10).

15. Ventilbaugruppen nach Anspruch 14, wobei die Messeinrichtung (10) der Ventilbaugruppen (38) nach einem der Ansprüche 8 bis 12 ausgebildet ist, **dadurch gekennzeichnet, dass** die Stege (24) in einer Weise ausgelegt sind, dass die Auslenkung der Stege (24) durch unterschiedliche Dimensionierung für unterschiedliche Nennlasten, Maximallasten nahezu gleich ist.

## Claims

1. Measuring device (10) for recording at least one force and/or torque curve resulting when a control valve (32) is actuated by an actuating drive (34), which measuring device comprises a housing (11) which can be arranged between the control valve (32) and the actuating drive (34) and is provided with a first and a second connecting wall (14, 16) and at least one connecting element (18) which connects the first and second connecting walls (14, 16), with the first connecting wall (14) being connected to the actuating drive (34), and the second connecting wall (16) being connected to the control valve (32), with a connecting shaft (12) for connecting a drive shaft of the actuating drive (34) to an actuating shaft of a control valve (32) being arranged in a central through-opening (14c, 16c) in the two connecting walls (14, 16), with the connecting shaft (12) passing through the measuring device (10), wherein the connecting shaft (12) is arranged at a distance from, and freely rotatable with respect to, the connecting walls (14, 16), and at least one resilient element is provided between the first connecting wall (14) and the connecting element (18), wherein a measuring unit is provided in the housing (11), which measuring unit has at least two sub-measuring units, with the first sub-measuring unit being in the form of a torque sensor unit and the second sub-measuring unit being in the form of a rotational-angle sensor unit, which sub-measuring units each comprise a signal transmitter and a signal receiver, and which signal receivers are arranged in a common measuring module (20), **characterized in that** the first signal transmitter is arranged on the first connecting wall (14), and the second signal transmitter is arranged on the connecting shaft (12).

2. Measuring device according to claim 1, **characterized in that** the signal transmitter is in the form of a sample to be scanned by the signal receiver.

3. Measuring device according to any one of the preceding claims, **characterized in that** the measuring module (20) is arranged on the connecting element (18).

4. Measuring device according to any one of the preceding claims, **characterized in that** the measuring module (20) is arranged between the first and second connecting walls (14, 16) centrally and at a radial distance from the connecting shaft (12).

5. Measuring device according to any one of the preceding claims, **characterized in that** at least one sub-measuring unit, in particular both sub-measuring units, is/are designed as magnetic sensors.

6. Measuring device according to any one of claims 2 to 5 above, **characterized in that** the signal transmitter of the rotational-angle sensor unit is in the form of a sample to be scanned with at least one magnetic element, such as a pole ring (28a), and the signal receiver is constituted by a rotational-angle sensor (28b) that detects the magnetic element.

7. Measuring device according to any one of claims 2 to 6 above, **characterized in that** the signal transmitter of the torque sensor unit is in the form of a sample to be scanned with at least one magnetic element (26c), and the signal receiver is constituted by a torque sensor (26a) that detects the magnetic element (26c).

8. Measuring device according to any one of the preceding claims, **characterized in that** the resilient element is more resilient in the direction of rotation of the axis of rotation (12a) than in the direction of the axis of rotation (12a), and that, as an option in addition, the resilient element is constituted by webs (24) that connect the first connecting wall to the connecting element, and, provided the preceding features of the claim are present, that, as an option in addition, the webs (24) extend radially from the first connecting wall (14) to the connecting element (18) with respect to the axis of rotation (12a).

9. Measuring device according to claim 8, **characterized in that** the webs (24) extend axially parallel from the first connecting wall (14) to the connecting element (18) with respect to the axis of rotation (12a).

10. Measuring device according to any one of the preceding claims, **characterized in that** connection openings (14a, 16a) are provided in the first connecting wall (14), for connecting the actuating drive (34) to the first connecting wall (14), and are provided in the second connecting wall (16), for connecting the control valve (32) to the second connecting wall (16).

11. Measuring device according to any one of the preceding claims, **characterized in that** the measuring module (20) comprises a circuit board (30) which includes the parts of the sensor units, the measuring transducers, a microcontroller, a memory element, a connecting means, a transmitting means and a communicating means, in particular also an interface.

12. Measuring device according to any one of the preceding claims, **characterized in that** a positioner, in particular an I/P converter and/or a motor controller, is provided in the measuring module (20).

13. Valve assembly (38) comprising an actuating drive (34) with a drive rod, a control valve (32) which can be actuated via a valve rod, and a measuring device (10) according to any one of the preceding claims, **characterized in that** the measuring device (10) is detachably connected to the housing of the actuating drive (34) and is detachably connected to the housing of the control valve (32), with the measuring device (10) connecting the drive shaft of the actuating drive (34) and the drive shaft of the control valve (32) via the connecting shaft (12).

14. Plural valve assemblies according to claim 13, which have differently dimensioned actuating drives, control valves and housings of the measuring device, **characterized in that** the dimension and the design of the measuring module (20) of the valve assemblies (38) are the same in each case, and that, as an option in addition, the base area A of the measuring module (20) is in the range of 30 mm² <= A <= 50 mm², and/or that, as an option in addition, the positioning of the signal transmitter relative to the signal receiver of each valve assembly (38) is identical in each case, and that, as an option in addition, the signal receiver is designed as a pole ring (28a), with the number of poles being constant, irrespective of the dimensions of the actuating drive (34), the control valve (32) and the housing (11) of the measuring device (10).

15. Valve assemblies according to claim 14, with the measuring device (10) of the valve assemblies (38) being of the type specified in any one of claims 8 to 12 above, **characterized in that** the design of the webs (24) is such that, by varying the dimensions of the webs to accommodate different nominal loads and maximum loads, the deflection of the webs (24) is nearly the same.

## Revendications

1. Dispositif de mesure (10) pour enregistrer au moins une variation de force et/ou de couple résultant de l'actionnement d'une soupape de réglage (32) par un entraînement de réglage (34), avec un boîtier (11) pouvant être disposé entre la soupape de réglage (32) et l'entraînement de réglage (34), qui est pourvu d'une première et d'une deuxième paroi de raccordement (14, 16) et d'au moins un élément de liaison (18) reliant la première et deuxième paroi de raccordement (14, 16), dans lequel la première paroi de raccordement (14) peut être reliée à l'entraînement de réglage (34) et la deuxième paroi de raccordement (16) à la soupape de réglage (32), dans lequel un arbre de liaison (12) pour relier un arbre d'entraînement de l'entraînement de réglage (34) à un arbre d'actionnement d'une soupape de réglage (32) est disposé dans une ouverture de passage centrale (14c, 16c) des deux parois de raccordement (14, 16), dans lequel l'arbre de liaison (12) traverse le dispositif de mesure (10), dans lequel l'arbre de liaison (12) est disposé librement rotatif à une certaine distance par rapport aux parois de raccordement (14, 16) et au moins un élément élastique est prévu entre la première paroi de raccordement (14) et l'élément de liaison (18), dans lequel une unité de mesure est prévue dans le boîtier (11), dans lequel l'unité de mesure présente au moins deux sous-unités de mesure, dans lequel la première sous-unité de mesure est réalisée en tant qu'une unité capteur de couple et la deuxième sous-unité de mesure en tant qu'une unité capteur d'angle de rotation, dans lequel les sous-unités de mesure présentent respectivement un émetteur de signal et un récepteur de signal, et dans lequel les récepteurs de signal sont disposés dans un module de mesure (20) commun, **caractérisé en ce que** le premier émetteur de signal est disposé sur la première paroi de raccordement (14) et le deuxième émetteur de signal sur l'arbre de liaison (12).

2. Dispositif de mesure selon la revendication 1, **caractérisé en ce que** l'émetteur de signal est réalisé sous la forme d'un motif destiné à être échantillonné par le récepteur de signal.

3. Dispositif de mesure selon l'une quelconque des revendications précédentes, **caractérisé en ce que** le module de mesure (20) est disposé sur l'élément de liaison (18).

4. Dispositif de mesure selon l'une quelconque des revendications précédentes, **caractérisé en ce que** le module de mesure (20) est disposé entre la première et deuxième paroi de raccordement (14, 16) de manière centrale et radialement espacée de l'arbre de liaison (12).

5. Dispositif de mesure selon l'une quelconque des revendications précédentes, **caractérisé en ce qu'**au moins une sous-unité de mesure, en particulier les deux sous-unités de mesure, est réalisée en tant que capteurs magnétiques.

6. Dispositif de mesure selon l'une quelconque des revendications 2 à 5, **caractérisé en ce que** l'émetteur de signal de l'unité capteur d'angle de rotation est réalisé en tant que motif à échantillonner avec au moins un élément magnétique, tel qu'une bague polaire (28a), et le récepteur de signal est formé par un capteur d'angle de rotation (28b) détectant l'élément magnétique.

7. Dispositif de mesure selon la revendication 2 à 6, **caractérisé en ce que** l'émetteur de signal de l'unité capteur de couple est réalisé en tant que motif à échantillonner avec au moins un élément magnétique (26c) et le récepteur de signal est formé par un capteur de couple (26a) détectant l'élément magnétique (26c).

8. Dispositif de mesure selon l'une quelconque des revendications précédentes, **caractérisé en ce que** l'élément élastique est plus élastique dans la direction de rotation de l'axe de rotation (12a) qu'en direction de l'axe de rotation (12a) et, éventuellement en plus, que l'élément élastique est formé par des éléments jointifs (24) reliant la première paroi de raccordement et l'élément de liaison et, dans la mesure où les caractéristiques précédentes de la revendication sont présentes, éventuellement en plus, que les éléments jointifs (24) s'étendent radialement de la première paroi de raccordement (14) à l'élément de liaison (18) par rapport à l'axe de rotation (12a).

9. Dispositif de mesure selon la revendication 8, **caractérisé en ce que** les éléments jointifs (24) s'étendent axialement de la première paroi de raccordement (14) à l'élément de liaison (18) parallèlement par rapport à l'axe de rotation (12a).

10. Dispositif de mesure selon l'une quelconque des revendications précédentes, **caractérisé en ce que** des ouvertures de raccordement (14a, 16a) sont prévues dans la première paroi de raccordement (14) pour la liaison de l'entraînement de réglage (34) à la première paroi de raccordement (14) et dans la deuxième paroi de raccordement (16) pour la liaison de la soupape de réglage (32) à la deuxième paroi de raccordement (16).

11. Dispositif de mesure selon l'une quelconque des revendications précédentes, **caractérisé en ce que** le module de mesure (20) comprend une carte de circuits imprimés (30), qui présente les parties des unités capteur, les transformateurs de mesure, un microcontrôleur, un élément de mémoire, un moyen de raccordement, un moyen de transmission et un moyen de communication, en particulier également une interface.

12. Dispositif de mesure selon l'une quelconque des revendications précédentes, **caractérisé en ce qu'**un régulateur de position, en particulier un convertisseur I/P et/ou une commande de moteur, est prévu dans le module de mesure (20).

13. Ensemble soupape (38) comprenant un entraînement de réglage (34) avec une tige d'entraînement, une soupape de réglage (32), qui peut être actionnée par l'intermédiaire d'une tige de soupape, ainsi qu'un dispositif de mesure (10) selon l'une quelconque des revendications précédentes, **caractérisé en ce que** le dispositif de mesure (10) est relié de manière détachable au boîtier de l'entraînement de réglage (34) et de manière détachable au boîtier de la soupape de réglage (32), dans lequel le dispositif de mesure (10) relie l'arbre d'entraînement de l'entraînement de réglage (34) et l'arbre d'entraînement de la soupape de réglage (32) par l'intermédiaire de l'arbre de liaison (12).

14. Plusieurs ensembles soupape selon la revendication 13, lesquels présentent des entraînements de réglage, des soupapes de réglage et des boîtiers du dispositif de mesure de différentes dimensions, **caractérisés en ce que** la dimension et la réalisation du module de mesure (20) des ensembles soupape (38) sont conçues respectivement de façon identique et, éventuellement en plus, que la surface de base A du module de mesure (20) se situe dans la plage de 30 mm² <= A <= 50 mm² et/ou, éventuellement en plus, que le positionnement de l'émetteur de signal est réalisé de manière respectivement identique au récepteur de signal de chaque ensemble soupape (38) et, éventuellement en plus, que le récepteur de signal est réalisé en tant que bague polaire (28a),
dans lesquels le nombre des pôles est constant, indépendamment du dimensionnement de l'entraînement de réglage (34), de la soupape de réglage (32) et du boîtier (11) du dispositif de mesure (10).

15. Ensembles soupape selon la revendication 14, dans lesquels le dispositif de mesure (10) des ensembles soupape (38) est réalisé selon l'une quelconque des revendications 8 à 12, **caractérisé en ce que** les éléments jointifs (24) sont mis au point de façon que la déviation des éléments jointifs (24) due à un dimensionnement différent pour différentes charges nominales, charges maximales soit presque identique.
